# EUROPÄISCHE PATENTSCHRIFT

(11) **EP 1 759 950 B1**
(45) Veröffentlichungstag und Bekanntmachung des Hinweises auf die Patenterteilung: **21.04.2010**
(21) Anmeldenummer: 05018921.6
(22) Anmeldetag: 31.08.2005
(51) Int. Cl.: B60T 13/22, B66F 9/06

(54) **Feststellbremse für eines Flurförderfahrzeug**
Parking brake for a pallet truck.
Frein de stationnement pour un véhicule élévateur à fourche

(43) Veröffentlichungstag der Anmeldung: 07.03.2007
(73) Patentinhaber: HAWE Hydraulik SE, 81673 München (DE)
(72) Erfinder: Hundschell, Hilarius, 84424 Isen (DE); Heusser, Dipl.-Ing. Univ. Martin, 81245 München (DE)
(74) Vertreter: Grünecker, Kinkeldey, Stockmair & Schwanhäusser Anwaltssozietät

(56) Entgegenhaltungen:
- EP-A- 1 010 597
- US-A- 3 802 746
- US-A- 4 856 622
- US-A- 5 009 126

## Beschreibung

Die Erfindung betrifft ein Flurförderfahrzeug der im Oberbegriff des Patentanspruchs 1 angegebenen Art.

Bei solchen aus der Praxis bekannten Flurförderfahrzeugen versorgt meist eine motorisch angetriebene Haupt-Pumpe die verschiedenen für die Arbeitsfunktionen vorgesehenen Hydroverbraucher, gegebenenfalls ein hydraulisches Lenksystem, und auch beispielsweise die Feststellbremse. Die Pumpe wird von einem Elektromotor getrieben, der aus einer leistungsfähigen Batterie versorgt wird. Alternativ könnte als Antriebsquelle auch ein Verbrennungsmotor dienen. Eine spezielle Ausstattungsoption des Flurförderfahrzeugs, insbesondere einem Elektrostapler, kann eine Batterieverriegelung sein, die das Herausfallen bzw. die unbefugte Entnahme der relativ großen, schweren und teuren Batterie verhindert. Die Feststellbremse wird meist durch Federkraft eingerückt und entweder hydraulisch oder über einen Bowdenzug gelöst. Ein hydraul,isches Lüften der Feststellbremse kann im Notfall auch über das Lenksystem möglich sein. Die Betriebsbremse, z.B. eine Hydraulik-Lamellenbremse mit einem Bremskraftverstärker, gegebenenfalls in einem separaten Hydraulikkreis ähnlich wie in einem Automobil, wird durch Federkraft gelöst und hydraulisch betätigt.

Bei dem aus EP 1 010 597 A bekannten, elektrisch oder motorisch betriebenen Flurförderfahrzeug baut sich über das 3/2-Wege-Magnetventil zwischen dem Druckreduzierventil und dem Lüftzylinder der Feststellbremse in der Passivkondition des Feststellbremsen-Steuermoduls bei langen Stillstandszeiten der von der Pumpe aufgebaute Druck wegen unvermeidlicher Leckagen ab, so dass die Feststellbremse nur mehr gelöst werden kann, wenn die Pumpe angetrieben wird. Der Versorgungsanschluss für einen Lenksteuerungsmodul bzw. einen Betriebsbremsen-Steuermodul ist in der Pumpenleitung zum Feststellbremsen-Steuermodul bzw. zu dessen Druckreduzierventil angeordnet. Jeder Modul der mehreren miteinander kombinierbaren Module ist mit einem eigenen Druckreduzierventil ausgestattet. Wenn jedoch ein Notfall auftritt, z.B. ein Stromausfall aufgrund zu schwacher Batteriekapazität oder entnommener Batterie des elektrisch betriebenen Flurförderfahrzeuges, oder bei einem Batterieschaden, lässt sich die Feststellbremse aufgrund fehlenden Drucks nicht mehr lösen und lässt sich auch die Lenkung nicht mehr betätigen.

Der Erfindung liegt die Aufgabe zugrunde, ein Flurförderfahrzeug anzugeben, bei dem eine dem bordeigenen Hydrauliksystem gut angepasste Betätigung der Feststellbremse auch in einem Notfall möglich ist, und, falls erforderlich, in modularer Bauweise auch die hydraulische Betätigung anderer Ausstattungsoptionen wie der Betriebsbremse und/oder der Batterieverriegelung in systemkonformer Weise möglich ist.

Die gestellte Aufgabe wird mit den Merkmalen des Patentanspruchs 1 gelöst.

Der Feststellbremsen-Steuermodul ist in das Hydrauliksystem des Flurförderfahrzeugs auf baulich einfache Weise integrierbar und ermöglicht das Einrücken und Lösen der Feststellbremse auf steuerungstechnisch einfache Weise. Ferner bietet der Feststellbremsen-Steuermodul optimale Voraussetzungen, auch wenigstens eine weitere Ausstattung des Flurförderfahrzeugs wie die Betriebsbremse und/oder die Batterieverriegelung eingliedern und systemkonform betätigen zu können, weil der vom Druckreduzierventil bereits auf das passende Druckniveau reduzierte Druck für solche weitere Ausstattungen nutzbar ist, und mit dem zum Druckreduzierventil sperrenden Rückschlagventil den Vorteil bietet, den reduzierten Druck leckagefrei über lange Zeit zu halten, wenn der Feststellbremsen-Steuermodul in der Passivkondition ist. Deshalb ist es auch nach einer länger dauernden Passivkondition z.B. möglich, zumindest die Feststellbremse mittels des leckagefrei gehaltenen, reduzierten Drucks zu lösen, und/oder noch eine weitere Ausstattung zumindest einmal zu betätigen. Dabei kann zwischen dem Rückschlagventil und dem 3/2-Magnetventil ein Druckspeicher angeschlossen sein, der in Passivkondition des Feststellbremsen-Steuermoduls dank der leckagefreien Druckhaltung Betätigungsvorgänge ermöglicht, selbst wenn zur Schonung der Batterie die Haupt-Pumpe nicht betrieben wird, oder gar nicht betrieben werden kann, und ist additiv oder alternativ eine Notpumpe modular mit dem Feststellbremsen-Steuermodul kombiniert, zweckmäßig eine Handpumpe, um ohne die Haupt-Pumpe, beispielsweise bei Fehlen der Batterie oder in einer anderen Notkondition, eine Betätigung hydraulisch vornehmen zu können. Falls der Druckspeicher und die Notpumpe vorgesehen sind, kann die Notpumpe auch zum Laden des Druckspeichers eingesetzt werden. Ferner ist der Druckschalter zwischen dem 3/2-Magnetventil und dem Luftzylinder als direkter oder indirekter Melder für die ordnungsgemäße Lüftschaltstellung des 3/2-Magnetventils und/oder für den ordnungsgemäßen Feststellbremsen-Lüftdruck ausgebildet, so dass eine die Signale des Druckschalters empfangende, übergeordnete Steuerung darüber informiert ist, dass ein ordnungsgemäßer Betrieb ohne Unfallgefahr möglich ist. Hierbei trägt das 3/2-Wege-Magnetventil als Sitzventil mit dem Rückschlagventil zur leckagefreien Isolierung des Versorgungsanschlusses bei.

Um eine übergeordnete Steuerung über das ordnungsgemäße Schalten des 3/2-Magnetsitzventils im Feststellbremsen-Steuermodul zu informieren, ist es zweckmäßig, dem Magnetsitzventil einen elektrischen Schaltstellungsmelder zuzuordnen.

Bei einer weiteren vorteilhaften Ausführungsform sind an den Versorgungsanschluss des Feststellbremsen-Steuermoduls ein Betriebsbremsen-Steuermodul oder ein Batterieverriegelungs-Steuermodul, oder beide Module angeschlossen. Mit dem Betriebsbremsen-Steuermodul oder/und den Batterieverriegelungs-Steuermodul lassen sich unter Nutzen des vorhandenen, bereits reduzierten Drucks die notwendigen Funktionen problemlos ausführen. Dabei ist das System so ausgebildet, dass, insbesondere mit dem Druckspeicher und/oder der Notpumpe, solche Funktionen bei einer Notkondition auch ohne Betrieb der Haupt-Pumpe durchzuführen sind, welche Funktionen bei ordnungsgemäß betriebener Hauptpumpe ohnedies neben den anderen Arbeitsfunktionen des Flurförderfahrzeugs bequem gesteuert werden können. Ein Hauptzweck der Module besteht jedoch darin, bei Notkonditionen unabhängig von der Haupt-Pumpe bestimmte Betätigungen oder Funktionen zuverlässig durchführen zu können, beispielsweise um das Flurförderfahrzeug mobil zu machen, z.B. wegschieben oder schleppen zu können, oder um die Batterie zu wechseln.

Bei einer bevorzugten Ausführungsform weist der Betriebsbremsen-Steuermodul ein 3/2-Proportionaldruckregelventil und diesem vorgesetzt ein 2/2-Magnetschaltventil mit leckagefreier Absperrstellung auf. Das Druckregelventil ermöglicht eine feinfühlige Betätigung der Betriebsbremse, sobald das 2/2-Magnetschaltventil frei gesteuert worden ist. Die leckagefreie Absperrstellung des 2/2-Magnetschaltventils ist wichtig, um den reduzierten Druck leckagefrei zu halten, wofür das Druckregelventil nicht notwendigerweise geeignet sein muss.

Bei einer zweckmäßigen Ausführungsform weist der Batterieverriegelungs-Steuermodul ein 3/2-Magnetsitzventil auf, vorzugsweise mit einem Schwarz/Weiß-Schaltmagneten, das die korrekte Betätigung oder Entriegelung der Batterieverriegelung ermöglicht, und dank der Sitzventilbauweise den reduzierten Druck leckagefrei über lange Ruhezeiten hält. Die Batterieverriegelung arbeitet beispielsweise wie üblich mit einem mechanischen System, das selbsthaltend ist und bestimmte mechanische Abläufe beim Einsetzen oder Entnehmen der Batterie erfordert, wobei die hydraulische Steuerung die Voraussetzungen für diese Abläufe einstellt, auch in einer Notsituation. Dabei ist der Batterieverrieglungs-Steuermodul an den Rücklauf angeschlossen, damit die Batterieverriegelung hydraulisch entlastet und damit eingerückt bleibt, und ist eine direkte, an den Anschluss für den reduzierten Druck angeschlossene Arbeitsleitung zum Anschluss eines Differentialzylinders der Batterieverriegelung vorgesehen, so dass bei Vorliegen des korrekten reduzierten Drucks die Batterieverriegelung eingerückt bleibt, und erst durch Schalten des 3/2-Magnetsitzventils die Voraussetzungen zum Lösen der Batterieverriegelung erfüllt werden.

Die Melder und die Magneten sind zweckmäßig an eine elektronische Steuerung angeschlossen.

Im Hinblick darauf, dass auch bei einer Notkondition die erforderlichen Funktionen hydraulisch durchführbar sind, z.B. bei entnommener oder stromloser Batterie, ist es zweckmäßig, wenn Handbetätigungen zumindest an den Magnetsitzventilen des Feststellbremsen-Steuermoduls und des Batterieverriegelungs-Steuermoduls vorgesehen sind. Unter Nutzen der Kapazität des Druckspeichers und/oder der Notpumpe können mit der jeweiligen Handbetätigung dann die Funktionen auch ohne Stromversorgung rein hydraulisch durchgeführt werden.

Anhand der Zeichnung werden Ausführungsformen des Erfindungsgegenstandes erläutert. Es zeigen:
- Fig. 1: eine schematische Seitenansicht eines Flurförderfahrzeugs,
- Fig. 2: ein Blockschaltbild eines Feststellbremsen-Steuermoduls,
- Fig. 3: ein Blockschaltbild eines Moduls mit einer Notpumpe für den Feststellbremsen-Steuermodul,
- Fig. 4: ein Blockschaltbild eines Betriebsbremsen-Steuermoduls, und
- Fig. 5: ein Blockschaltbild eines Batterieverriegelungs-Steuermoduls.

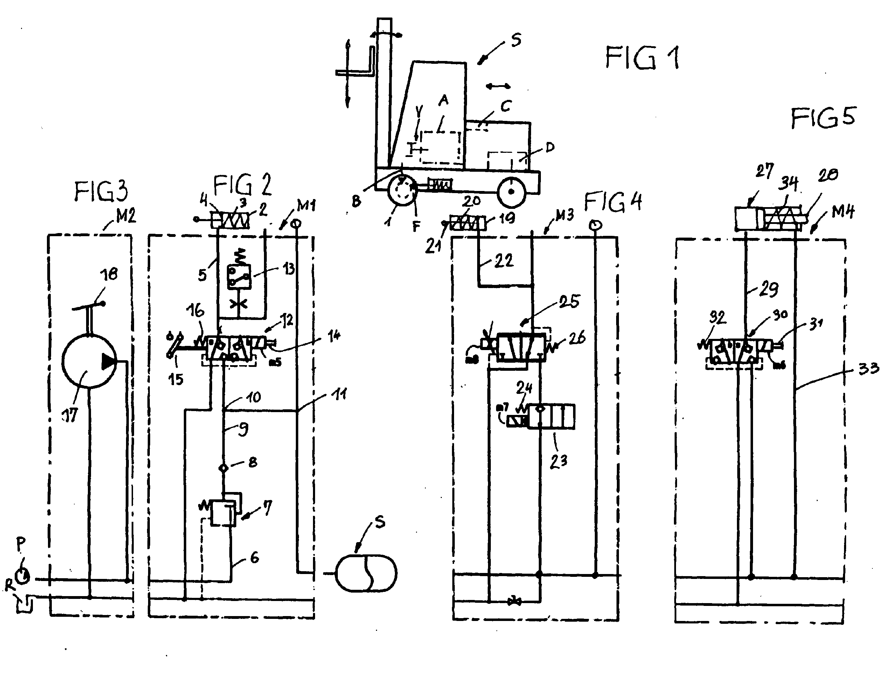

Ein Flurförderfahrzeug S in Fig. 1, beispielsweise ein mittels eines Elektromotors als Fahrantrieb D (oder eines Verbrennungsmotors) direkt oder über einen Hydromotor fahrbarer Stapler, weist mehrere, nicht näher hervorgehobene Hydroverbraucher (Hubzylinder, Hubmastzylinder, Neigezylinder, und dgl.) auf, die über eine motorisch angetriebene Haupt-Pumpe P mit Hydraulikmedium versorgt und auf nicht gezeigte Weise gesteuert werden. Ferner ist eine Lenkvorrichtung vorgesehen, und gegebenenfalls eine verstellbare Kabine oder dgl. Zum Betätigen der verschiedenen Funktionskomponenten des Flurförderfahrzeugs S kann eine elektronische Steuerung C vorgesehen sein. Im Falle eines Elektromotors als Antriebsquelle ist eine relativ leistungsfähige große Batterie A vorgesehen, die in der Betriebslage im Fahrzeug durch eine Batterieverriegelung V gesichert ist. Für zumindest ein Rad 1 ist eine hydraulisch lösbare Feststellbremse F vorgesehen. Ferner kann eine hydraulisch betätigbare Betriebsbremse B vorgesehen sein. Im Falle eines Verbrennungsmotors als Antriebsquelle wird die Batterie A weniger leistungsfähig und kleiner sein als in einem Elektrostapler.

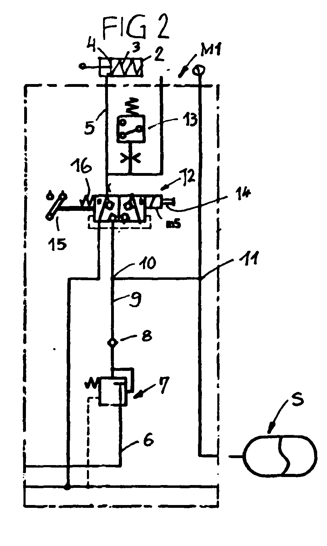

Teil des Hydrauliksystems für die Funktionskomponenten oder gegebenenfalls davon getrennt, ist ein in Fig. 2 gezeigter Feststellbremsen-Steuermodul M1, der über eine Pumpenleitung 6 von der motorisch antreibbaren Haupt-Pumpe P versorgt und an einen Rücklauf R angeschlossen ist. Der Feststellbremsen-Steuermodul M1 dient beispielsweise zum Betätigen eines einseitig beaufschlagbaren Federspeicherzylinders 2 der gegebenenfalls als Lamellenbremse ausgebildeten Feststellbremse F, wobei eine Feder 3 einen Kolben 4 zum Einrücken der Feststellbremse beaufschlagt. Die Feststellbremse F ist über eine Arbeitsleitung 5 hydraulisch lösbar.

Die Pumpenleitung 6 führt im Feststellbremsen-Modus M1 zu einem Druckreduzierventil 7, stromab dessen ein zum Druckreduzierventil 7 sperrendes Rückschlagventil 8 in einer Versorgungsleitung 9 vorgesehen ist. Eine Abzweigung 10 der Versorgungsleitung 9 bildet einen Versorgungsanschluss 11, der ggfs. mit einem symbolisch angedeuteten Manometer kommuniziert. Zwischen der Abzweigung 10 und der Arbeitsleitung 5 sowie dem Rücklauf R ist ein 3/2-Magnetsitzventil 12 mit einem Schaltmagneten m5 angeordnet. In einer über eine Blende abgesicherten Nebenleitung der Arbeitsleitung 5 ist ein elektrischer Druckschalter 13 angeordnet. Das 3/2-Magnetsitzventil 12 weist eine Handbetätigung 14 auf, wird durch eine Feder 16 in Richtung zu der gezeigten Schaltstellung beaufschlagt, und verfügt z.B. über einen elektrischen Ventilstellungs-Melder 15, der, beispielsweise, in der gezeigten Schaltstellung kein Signal liefert, in welcher der kolbenstangenseitige Raum des Federspeicherzylinders 2 zum Rücklauf entlastet ist (Feststellbremse F eingerückt).

Beispielsweise am Versorgungsanschluss 11 ist ein Druckspeicher S mit einem vorbestimmten Speichervermögen angeschlossen. Alternativ oder additiv kann mit dem Feststellbremsen-Steuermodul M1 ein weiterer Modul M2 mit einer Notpumpe 17, beispielsweise einer Handpumpe mit einem Handbetätigungshebel 18, kombiniert werden. Der Modul M2 enthält Abschnitte der Pumpenleitung und der Rücklaufleitung, an die die Notpumpe 17 angeschlossen ist. Ggfs. ist die Notpumpe 17 und/oder der Druckspeicher S in den Steuermodul M eingegliedert.

Die Module M1, M2 (und die später erläuterten Module M3 und/oder M4) können als mit den Ventilkomponenten und den Leitungsabschnitten vorgefertigte Blöcke ausgebildet sein, die entsprechende Anschlussbilder aufweisen, so dass die übliche modulare Blockbauweise aus mindestens zweien der Modulen möglich ist.

### Funktion:

Wird die Haupt-Pumpe P angetrieben, dann hält das Druckreduzierventil 7 in der Leitung 9 einen vorbestimmten reduzierten Druck, beispielsweise mindestens 85 Bar. Auf diesen Druck ist der elektrische Druckschalter 13 ausgelegt. Dieser Druck genügt, um die Feststellbremse F zu lösen, steht auch am Versorgungsanschluss 11 an, und lädt, falls vorhanden, den Druckspeicher S. Die Feder 16 hält die gezeigte Schaltstellung des 3/2-Magnetsitzventils 12, das im Anschluss der Leitung 9 leckagefrei absperrt. Die Feststellbremse F ist eingerückt.

Zum Lösen der Feststellbremse F wird der Schaltmagnet m5 bestromt, so dass das 3/2-Magnetsitzventil 12 die andere Schaltstellung einnimmt und die Arbeitsleitung 5 mit der Versorgungsleitung 9 verbunden wird. Der Druck auf der kolbenstangenseitigen des Kolbens 4 verschiebt den Kolben gegen die Kraft der Feder 3. Die Feststellbremse F ist gelöst. Der Melder 15 meldet die korrekte Schaltstellung, während der elektrische Schalter 13 den korrekten Lüftdruck bzw. die korrekte Schaltstellung bestätigt.

Kommt es zu einem Stromausfall oder zum Zusammenbruch der Batterie, dann stellt die Feder 16 die vorhergehende Schaltstellung wieder ein. Die Arbeitsleitung 5 wird mit dem Rücklauf R verbunden. Die Feststellbremse F wird eingerückt. Zwischen dem leckagefrei absperrenden Rückschlagventil 8 und dem Anschluss am 3/2-Magnetsitzventil 12 wird der Druck im Versorgungsanschluss 11 und im Druckspeicher S gehalten. Ist es trotz Stromausfalls erforderlich, die Feststellbremse F zu lösen, beispielsweise um das Flurförderfahrzeug S wegzuschleppen, dann wird das 3/2-Magnetsitzventil 12 an der Handbetätigung 14 umgeschaltet. Sollte die Speicherkapazität des Druckspeichers, falls vorhanden, nicht ausreichen, um die Feststellbremse F zu lösen, dann wird über die Notpumpe 17, falls vorhanden, der entsprechende Lösedruck aufgebaut, und auch der Druckspeicher S geladen. Bei geladenem Druckspeicher S ist im Regefall selbst nach langer Passivkondition in stromlosem Zustand das Lösen der Feststellbremse F zumindest einmal problemlos möglich.

Als weitere Option kann der Feststellbremsen-Steuermodul M1 optional entweder mit einem Betriebsbremsen-Steuermodul M3 gemäß Fig. 4 und/oder einem Batterieverriegelungs-Steuermodul M4 gemäß Fig. 5 kombiniert werden. Selbstverständlich können auch beide Module M3, M4 an den Modul M1 oder den Modul M2 angebaut werden, und können auch weitere Module für weitere Funktionskomponenten vorgesehen werden, die sämtliche über den Versorgungsanschluss 11 mit dem vom Druckreduzierventil 7 reduzierten Druck versorgt werden, wobei, wie erläutert werden wird, auch in Passivkondition, d.h. stromlosem Zustand des Systems, der Druck am Versorgungsanschluss 11 zur Betätigung von Funktionen leckagefrei gehalten wird.

Der Betriebsbremsen-Steuermodul M3 dient zum Betätigen beispielsweise eines einseitig beaufschlagbaren Federspeicherzylinders 19, dessen Kolbenstange 21 durch eine Feder 20 in Löserichtung der Betriebsbremse B beaufschlagt ist. Der kolbenseitige Raum des Federspeicherzylinders 19 ist über eine Arbeitsleitung 22 druckbeaufschlagbar, und bei nicht betätigter Betriebsbremse B über ein 3/2-Proportionaldruckregelventil 25 zum Rücklauf entlastet. Das 3/2-Proportionaldruckregelventil 25 wird mittels eines Proportionalmagneten m8 gegen die Kraft einer Regelfeder 26 betätigt und stellt einen Bremsdruck in der Arbeitsleitung 22 ein, der mit der Strombeaufschlagung des Proportional magneten m8 korrespondiert. Stromauf des 3/2-Proportionaldruckregelventils 25 ist ein 2/2-Magnetschaltventil 23 vorgesehen, das durch eine Feder 24 in der gezeigten, leckagefreien Absperrstellung bezüglich des Drucks aus dem Versorgungsanschluss 11 gehalten wird, und durch einen Schaltmagneten m7, gegebenenfalls mit hydraulischer Vorsteuerung, in die andere Schaltstellung (Durchgangsstellung) gezogen wird.

### Funktion:

Ist das Bremspedal oder ein Bremshebel bzw. Joystick für die Betriebsbremse B nicht betätigt, dann ist die in Fig. 4 gezeigte Schaltstellung gegeben. Die Betriebsbremse, z.B. eine Lamellenbremse, ist durch die Feder 20 ausgerückt.

Bei angetriebener Haupt-Pumpe P steht am 2/2-Magnetschaltventil 23 der reduzierte Druck von beispielsweise 85 Bar an. Wird das Bremspedal oder dgl. betätigt, dann wird der Schaltmagnet m7 bestromt, um die Durchflusstellung einzustellen, und wird der Proportionalmagnet m8 entsprechend bestromt, um den notwendigen Bremsdruck aufzubauen. Bei Stromausfall ist die Betriebsbremse bei der gezeigten Ausführungsform nicht bedienbar, da sich das 2/2-Magnetschaltventil nicht auf die Durchgangsstellung schalten lässt. Dennoch steht am 2/2-Magnetschaltventil 23 der reduzierte Druck vom Versorgungsanschluss 11 an.

Allerdings könnte bei einer nicht gezeigten Alternative eine Handbetätigung für beiden Ventile 25, 23 vorgesehen werden, um mittels des Speichervolumens des Druckspeichers S eine Notbremsfunktion auch der Betriebsbremse B zu steuern. In einer solchen Notsituation reicht im Regelfall aber die Feststellbremse F aus, die sich dank der Handbetätigung 14 jederzeit für eine solche Notbremsfunktion bedienen lässt.

Falls das Flurförderfahrzeug S auch mit einer Batterie-Verriegelung V ausgestattet ist, ist anstelle des Betriebsbremsen-Steuermoduls M3 oder zusätzlich zu diesem der Batterieverriegelungs-Steuermodul M4 angebaut.

Üblicherweise ist eine Batterieverriegelung V zu dem Zweck vorgesehen, ein Herausfallen oder unbefugtes Entnehmen der Batterie A zu verhindern, und nur nach gewollter Betätigung die Batterie freizugeben. Die Batterieverriegelung V weist z.B. einen Kniehebel-Mechanismus zur Verstellung eines Sperrelements auf, wobei sich der Kniehebelmechanismus von Hand dann lösen lässt, wenn zuvor die Batterieverriegelung hydraulisch gelöst wurde. Beispielsweise ist als Aktuator der Batterieverriegelung V ein doppelseitig beaufschlagbarer Differentialzylinder 27 vorgesehen, dessen Kolbenstange die Batterieverriegelung durch Zugbelastung hält, indem über eine im Batterieverriegelungs-Steuermodul 4 vorgesehene, direkt an den Versorgungsanschluss 11 angeschlossene Arbeitsleitung 33 der kolbenstangenseitige Raum mit Druck beaufschlagt wird. Gegebenenfalls kann auch eine Feder 34 vorgesehen sein, die auch ohne hydraulischen Druck die Batterieverriegelung V gesperrt hält.

An den Versorgungsanschluss 11 ist ein 3/2-Magnetsitzventil 30 angeschlossen, von dem eine Arbeitsleitung 29 zum kolbenseitigen Raum führt. Ein Anschluss des 3/2-Magnetsitzventils 30 ist an den Rücklauf angeschlossen. Das 3/2-Magnetsitzventil 30 weist einen Schaltmagneten m6, sowie eine Handbetätigung 31 und eine Feder 32 auf. In der gezeigten Schaltstellung ist beispielweise der Schaltmagnet m6 bestromt und wird der kolbenseitige Raum zum Rücklauf entlastet. Durch Entregen des Schaltmagneten 6 bei intakter Stromversorgung wird der kolbenseitige Raum druckbeaufschlagt und die Batterieverriegelung gelöst. Sollte die Stromversorgung ausgefallen sein, kann sie mittels der Handbetätigung 31 gelöst werden. Sollte die Speicherkapazität des Druckspeichers erschöpft (oder kein Druckspeicher vorgesehen sein), dann kann mittels der Notpumpe 17 der erforderliche Druck aufgebaut werden.

Das System ist so konzipiert, dass selbst nach längerer Stillstandszeit diese oder zumindest eine der Funktionen möglich ist, und zwar entweder mit oder ohne Druckspeicher S und mit oder ohne Notpumpe 17. Denn der Druck im Versorgungsanschluss 11 wird am Rückschlagventil 8, am Eingang der Leitung 10 in das 3/2-Magnetsitzventil, durch die leckagefreie Absperrstellung des 2/2-Magnetschaltventils 23 und durch das 3/2-Magnetsitzventil 30 leckagefrei gehalten. Es braucht deshalb, selbst bei intakter Stromversorgung, für solche Funktionen die Haupt-Pumpe P nicht notwendigerweise betrieben zu werden, um die Batterie A nicht zu belasten.

Bei einem Verbrennungsmotor als Antriebsquelle des Flurförderfahrzeugs S ist die Batterieverriegelung V nicht unbedingt erforderlich, jedoch eine mögliche Option. Bei einer nicht gezeigten Ausführungsform könnte auch wenigstens ein weiterer Modul für das Lenksystem zumindest mit dem Feststellbremsen-Steuermodul M1 kombiniert werden.

## Patentansprüche

1. Flurförderfahrzeug (S), insbesondere Stapler, mit einem Fahrantrieb (D), einer gegen Federkraft hydraulisch mittels eines Lüftzylinders (2) lüftbaren Feststellbremse (F) und einer hydraulischen Betriebsbremse (B), wobei eine motorisch antreibbare Pumpe (P) und ein elektrohydraulischer Feststellbremsen-Steuermodul (M1) vorgesehen sind, der zwischen der Pumpe (P) und dem Lüftzylinder (2) ein Druckreduzierventil (7) und ein an einen Rücklauf (R) angeschlossenes 3/2-Wege-Magnetventil umfasst, wobei zwischen dem 3/2-Wege-Magnetventil (12) und der Pumpe (P) ein Versorgungsanschluss (11) für wenigstens einen weiteren Modul vorgesehen ist, **dadurch gekennzeichnet, dass** im Feststellbremsen-Steuermodul (M1) zwischen dem Druckreduzierventil (7) und dem als Magnetsitzventil mit leckagefreier Absperrstellung ausgebildeten 3/2-Wege-Magnetventil (12) ein zum Druckreduzierventil (7) sperrendes Rückschlagventil vorgesehen ist, dass der Versorgungsanschluss (11) über das Druckreduzierventil (7) speisbar und zwischen dem 3/2-Wege-Magnetventil und dem Rückschlagventil (8) vorgesehen ist, dass zwischen dem 3/2-Wege-Magnetventil (12) und dem Lüftzylinder (2) ein elektrischer Druckschalter (13) angeschlossen ist, der als direkter oder indirekter Melder für die ordnungsgemäße Lüftschaltstellung des 3/2-Wege-Magnetventils (12) oder für den ordnungsgemäßen Feststellbremsen-Lüftdruck ausgebildet ist, und dass entweder ein Druckspeicher (S) oder eine Notpumpe (17) vorgesehen ist oder ein Druckspeicher (S) und eine Notpumpe (17) vorgesehen sind, wobei der Druckspeicher (S) zwischen dem Rückschlagventil (8) und dem 3/2-Wege-Magnetventil (12) an den Versorgungsanschluss (11) und die Notpumpe (17) zwischen der Pumpe (P) und dem Druckreduzierventil (7) angeschlossen ist.

2. Flurförderfahrzeug nach Anspruch 1, **dadurch gekennzeichnet, dass** der Versorgungsanschluss (11) in einer Passivkondition des Feststellbremsen-Steuermoduls (M1) unter dem reduzierten Druck des Druckreduzierventils (7) über das Rückschlagventil (8) und das 3/2-Wege-Magnetsitzventil von der Pumpe (P) und vom Rücklauf (R) leckagefrei isoliert ist.

3. Flurförderfahrzeug nach Anspruch 1, **dadurch gekennzeichnet, dass** die Notpumpe (17) eine Handpumpe mit einem Handbetätigungshebel (18) und zwischen einer Pumpeleitung (6) zum Druckreduzierventil (7) und dem Rücklauf (R) entweder in einem an den Feststellbremsen-Steuermodul (M1) angebauten Modul (M2) oder im Feststellbremsen-Steuermodul (M1) angeordnet ist.

4. Flurförderfahrzeug nach Anspruch 1, **dadurch gekennzeichnet, dass** das 3/2-Wege-Magnetventil (12) im Feststellbremsen-Steuermodul (M1) einen elektrischen Schaltstellungsmelder (15) aufweist.

5. Flurförderfahrzeug nach Anspruch 1, **dadurch gekennzeichnet, dass** an den Versorgungsanschluss (11) ein Betriebsbremsen-Steuermodul (M3) oder ein Batterieverriegelungs-Steuermodul (M4) für eine bordeigene Batterie (A) angeschlossen ist.

6. Flurförderfahrzeug nach Anspruch 5, **dadurch gekennzeichnet, dass** der Betriebsbremsen-Steuermodul (M3) ein 3/2-Proportionaldruckregelventil (25) und diesem vorgesetzt ein 2/2-Magnetschaltentil (23) mit leckagefreier Absperrstellung aufweist.

7. Flurförderfahrzeug nach Anspruch 5, **dadurch gekennzeichnet, dass** der an den Rücklauf (R) angeschlossene Batterieverriegelungs-Steuermodul (M4) ein 3/2-Magnetsitzventil (30), vorzugsweise mit einem Schwarz-/Weiß-Schaltmagneten (m6), und eine direkt an den Versorgungsanschluss (11) angeschlossene Leitung (33) zu einem Differentialzylinder (27) einer Batterieverriegelung (V) enthält.

8. Flurförderfahrzeug nach Anspruch 1 und 7, **dadurch gekennzeichnet, dass** das 3/2-Magnetventil (12) des Feststellbremsen-Steuermoduls (M1) und das 3/2-Magnetsitzventil (30) des Batterieverriegelungs-Steuermoduls (M4) jeweils eine Handbetätigung (14, 31) aufweisen.

## Claims

1. Pallet truck (S), in particular a forklift truck, comprising a traction drive (D), a parking brake (F) being releasable counter to spring force hydraulically by means of a releasing cylinder (2), a hydraulic service brake (B), a motor driven pump (P) and a electrohydraulic parking brake control module (M1), the parking brake control module (M1) including a pressure reducing valve (12) connected to a return line (R), the valves (7, 12) being provided between the pump (P) and the releasing cylinder (2), and a supply connection (11) between the 3/2-ways solenoid valve (12) and the pump (P) for at least a further module, **characterised in that** a check valve (8) is provided in the service brake control module (M1) between the pressure reducing valve (7) and the 3/2-ways solenoid valve (12), the 3/2-ways solenoid valve (12) being formed as a solenoid seat valve having a leakage-free blocking switching position, the check valve (8) blocking in a flow direction towards the pressure reducing valve (7), that the supply connection (11) is provided between the 3/2-ways solenoid valve and the check valve (8) and is supplied via the pressure reducing valve (7), that an electric pressure switch (13) is connected between the 3/2-ways solenoid valve (12) and the releasing cylinder (2), the pressure switch (13) being formed as a direct or indirect signalling device for the correct releasing switching position of the 3/2-ways solenoid valve (12) or for the correct releasing pressure of the parking brake, and that either a pressure accumulator (S) or an emergency pump (17) is provided or a pressure accumulator (S) and an emergency pump /17) are provided, the pressure accumulator (S) being connected between the check valve (8) and the 3/2-ways solenoid valve (12) to the supply connection (11) and the emergency pump (17) being connected between the pump (P) and the pressure reducing valve (7).

2. Pallet truck as in claim 1, **characterised in that** in a passive condition of the parking brake control module (M1) the supply connection (11) having reduced pressure of the pressure reducing valve (7) is separated leakage-free via the check valve (8), and that the 3/2-ways solenoid valve is separated leakage-free, respectively, from the pump (P) and from the return line (R).

3. Pallet truck as in claim 1, **characterised in that** the emergency pump (17) is a manual pump having a manual actuation lever (18), and that the emergency pump (17) is arranged between a pump line (6) leading to the pressure reducing valve (7) and the return line (R) either in a module (M2) mounted to the parking brake control module (M1) or in the parking brake control module (M1).

4. Pallet truck as in claim 1, **characterised in that** the 3/2-ways solenoid valve (12) comprises an electric switching position signalling device (15) in the parking brake control module (M1).

5. Pallet truck as in claim 1, **characterised in that** either a service brake control module (M3) or a battery locking control module (M4) for an on-board battery (A) is connected to the supply connection (11).

6. Pallet truck as in claim 5, **characterised in that** the service brake control module (M3) comprises a 3/2 proportional pressure regulating valve (25) and upstream of the valve (25) a 2/2 switching valve (23) operating with a leakage-free blocking switching position.

7. Pallet truck as in claim 5, **characterised in that** the battery locking control module (M4) connected to the return line (R) contains a 3/2 solenoid seat valve (30), preferably having a black/white switching solenoid (m6), and a line (33) leading to a differential cylinder (27) of a battery locking device (V), the line (33) being directly connected to the supply connection (11).

8. Pallet truck as in claim 1 and 7, **characterised in that** the 3/2-ways solenoid valve (12) of the parking brake control module (M1) and the 3/2 solenoid seat valve (30) of the battery locking control module (M4) respectively include a manual actuation (14, 31).

## Revendications

1. Chariot de manutention (S), en particulier chariot élévateur, comprenant un système d'entraînement (D), un frein de stationnement (F), qui peut être desserré hydrauliquement contre une force de ressort au moyen d'un cylindre de desserrage (2), et un frein de service hydraulique (B), une pompe (P) entraînable par moteur et un module de commande électro-hydraulique (M1) de frein de stationnement étant prévus, lequel module comprend entre la pompe (P) et le cylindre de desserrage (2) une soupape de réduction de pression (7) et une électrovanne 3/2 voies raccordée à un retour (R), un raccord d'alimentation (11) pour au moins un autre module étant prévu entre l'électrovanne 3/2 voies (12) et la pompe (P), **caractérisé en ce qu'**il est prévu dans le module de commande (M1) de frein de stationnement, entre la soupape de réduction de pression (7) et l'électrovanne 3/2 voies (12) réalisée sous forme de soupape à siège magnétique avec position d'arrêt sans fuite, une soupape anti-retour fermant en direction de la soupape de réduction de pression (7), que le raccord d'alimentation (11) peut être alimenté par l'intermédiaire de la soupape de réduction de pression (7) et est prévu entre l'électrovanne 3/2 voies et la soupape anti-retour (8), qu'un manostat (13) électrique, raccordé entre l'électrovanne 3/2 voies (12) et le cylindre de desserrage (2), est réalisé sous forme de détecteur direct ou indirect de la position de commutation de desserrage conforme de l'électrovanne 3/2 voies (12) ou de la pression de desserrage conforme du frein de stationnement, et que soit un accumulateur de pression (S) soit une pompe de secours (17), ou un accumulateur de pression (S) et une pompe de secours (17) sont prévus, l'accumulateur de pression (S) étant raccordé au raccord d'alimentation (11) entre la soupape anti-retour (8) et l'électrovanne 3/2 voies (12) et la pompe de secours (17) étant raccordée entre la pompe (P) et la soupape de réduction de pression (7).

2. Chariot de manutention suivant la revendication 1, **caractérisé en ce que** le raccord d'alimentation (11), dans une condition passive du module de commande (M1) du frein de stationnement, est isolé sans fuite de la pompe (P) et du retour (R), sous la pression réduite de la soupape de réduction de pression (7), par l'intermédiaire de la soupape anti-retour (8) et de la soupape à siège magnétique 3/2 voies.

3. Chariot de manutention suivant la revendication 1, **caractérisé en ce que** la pompe de secours (17) est une pompe à main avec un levier d'actionnement manuel (18) et est disposée entre une conduite de pompe (6) en direction de la soupape de réduction de pression (7) et le retour (R), soit dans un module (M2) adossé au module de commande (M1) de frein de stationnement, soit dans le module de commande (M1) de frein de stationnement.

4. Chariot de manutention suivant la revendication 1, **caractérisé en ce que** l'électrovanne 3/2 voies (12) présente un détecteur électrique (15) de position de commutation dans le module de commande (M1) de frein de stationnement.

5. Chariot de manutention suivant la revendication 1, **caractérisé en ce qu'**un module de commande (M3) de frein de service ou un module de commande (M4) de verrouillage de batterie pour une batterie de bord (A) sont raccordés au raccord d'alimentation (11).

6. Chariot de manutention suivant la revendication 5, **caractérisé en ce que** le module de commande (M3) de frein de service présente une soupape de réduction de pression proportionnelle 3/2 (25) et, en amont de cette dernière, une soupape de commutation magnétique 2/2 (23) avec position d'arrêt sans fuite.

7. Chariot de manutention suivant la revendication 5, **caractérisé en ce que** le module de commande (M4) de verrouillage de batterie, raccordé au retour (R), comporte une soupape à siège magnétique 3/2 (30), de préférence avec un aimant de commutation par tout ou rien (m6), et une conduite (33), raccordée directement au raccord d'alimentation (11), en direction d'un cylindre différentiel (27) d'un verrouillage de batterie (V).

8. Chariot de manutention suivant les revendications 1 et 7, **caractérisé en ce que** l'électrovanne 3/2 (12) du module de commande (M1) de frein de stationnement et la soupape à siège magnétique 3/2 (30) du module de commande (M4) de verrouillage de batterie présentent chacune un actionnement manuel (14, 31).
